# EUROPEAN PATENT SPECIFICATION

(11) **EP 1 726 139 B1**
(45) Date of publication and mention of the grant of the patent: **23.09.2009**
(21) Application number: 04715280.6
(22) Date of filing: 27.02.2004
(51) Int. Cl.: H04L 29/06

(54) **COMPRESSION SCHEME NEGOTIATION**
DATENKOMPRESSIONSVERHANDLUNG
NEGOCIATION RELATIVE A DES MECHANISMES DE COMPRESSION

(43) Date of publication of application: 29.11.2006
(73) Proprietor: NTT DoCoMo, Inc., Chiyoda-ku Tokyo 100-6150 (JP)
(72) Inventor: TARLANO, Anthony, 80337 München (DE); KELLERER, Wolfgang, 82256 Fürstenfeldbruck (DE); SCHOLLMEIER, Rüdiger, 81379 München (DE); EBERSPÄCHER, Jörg, 81249 München (DE)
(74) Representative: HOFFMANN EITLE
(86) International application number: PCT/EP2004/001976
(87) International publication number: WO 2005/086451

(56) References cited:
- US-A- 5 557 749
- STEVENS W R ED - STEVENS ET AL: "TCP/IP ILLUSTRATED, PASSAGE" TCP/IP ILLUSTRATED. VOL. 1 : THE PROTOCOLS, PROFESSIONAL COMPUTING SERIES, READING, MA : ADDISON WESLEY, US, vol. VOL. 1, 1994, pages 1-20, XP002285274 ISBN: 0-201-63346-9

## Description

### FIELD OF INVENTION

The present invention relates to a compression scheme negotiation, and in particular to a compression scheme negotiation method for a data rate efficient communication between communicating software processes and a related apparatus.

### BACKGROUND ART

Usually, the application of compression schemes allows to reduce a memory size or a transmission capacity during exchange of information between different software processes. In particular, in wireless environments the application of a compression scheme for the exchange of data including related protocol messages contributes to a more efficient usage of the scarce wireless spectrum.

Currently, there exists a huge variety of compression schemes dedicated to different types of applications. Examples are compression schemes for data exchange in the Internet such as WinZip, compression schemes for XML data, and compression schemes described in, e.g., Niedermeier, U., Heuer, J., Hutter, A., Stechele, W., Kaup, A.: An MPEG-7 tool for compression and streaming of XML data, IEEE International Conference on Multimedia and Expo, Lausanne, Switzerland, August2002; WHXML:http://www.w3.org/TR/wbxml; H. Liefke and D. Suciu, XMIII: An Efficient Compressor for XML Data, Technical Report MSCIS-99-26, University of Pennsylvania, 1999; and D. Salomon, Data Compression, The Complete Reference, Springer, New York, 1997.

Regarding negotiation of compression schemes, there exist related negotiation mechanisms for multimedia content delivery services or multimedia communication services as H.323 or SIP, for negotiation of a used codec and content compression or digitalization. Similarly, the HTTP protocol employs MIME type of compression schemes to inform a requesting software process about coding with respect to a pre-defined information content.

In US-A-5,557,749, there is described a method for automatically compressing and decompressing data for sender and receiver processes upon determination of a common compression/decompression method understood by both sender and receiver processes. Here, in the course of establishing a connection, an OPEN routine automatically negotiates a compression/decompression method between the sender and the receiver computer system.

However, all known compression scheme negotiation methods are bound to a certain type of application. Therefore, there does not exist a general compression scheme negotiation framework to ensure different processes, written with different languages, versions, and running under different operating systems that would allow compression scheme negotiation and re-configuration during run time for data rate efficient communication between communicating software processes.

### SUMMARY OF INVENTION

In view of the above, the problem of the present invention is to achieve a generic compression negotiation scheme for increased communication efficiency between communicating software processes.

According to the present invention, this object is achieved by a compression scheme negotiation method having the features of claim 1 and related compression scheme negotiation apparatus having the features of claim 27 for data rate efficient communication between communicating software processes.

The method, in a first step, achieves exchange of a first message indicating compression capability of a software process for agreement on a communication compression scheme to be used during a subsequent communication from/to the software process. Further, there is exchanged a second message with the software process indicating a compression option in response to the first message.

Then, there is established a communication compression scheme for a subsequent communication to/from the software process as a function of the compression capability and compression option or, in other words, according to the relation and matching between available compression scheme capability at the software process and the compression options provided for communication, e.g., available compression schemes, compression gains, etc.

Also, according to the inventive compression scheme negotiation method, it is proposed to encapsulate the first message and the second message for compatibility with the transport protocol for use for related message exchange.

According to the present invention, the levels for indication of compression capability on different levels of abstractions are compression class, compression specification and/or compression implementation, the compression class being the most general description of the compression scheme, followed by the compression specification being more specific, followed by the compression implementation referring to the actual code for running a compression scheme.

In other words, according to the present invention, it is proposed to apply tunneling to the first message and the second message.

An important advantage of the present invention is flexibility achieved through encapsulation and tunneling allowing the compression scheme negotiation framework to be independent of any transport protocol that may be used for the compression scheme negotiation framework. As lower layer protocols envelope, the first and second message lower layer transport protocol messages need not be specified in advance as a design decision which allows for the application of a wide range of lower layer protocols within the inventive compression scheme negotiation framework residing on higher levels of the protocol stack. In other words, the present invention avoids consideration of implementation specific aspects during setup of the compression scheme negotiation framework.

Further, the generality of the inventive compression scheme negotiation framework supports process-to-process communication in an extensible mechanism enabling all functionality aspects of negotiation and distribution of compression software for data rate efficient communication between communicating software processes. The inventive compression scheme negotiation method and related framework may be used to ensure that different software processes written in different languages, versions, and running under different operating systems can use the negotiation framework for more efficient application of compression schemes.

Yet another advantage of the present invention is the general applicability to the fields of process-to-process negotiation, compression of communication data, negotiation of compression schemes, and even runtime reconfiguration of pre-installed compression schemes. Therefore, software applications that may benefit from the present invention include application-to-application communication using, e.g., XML meta-data, negotiated compression schemes for signaling, software applications requiring processes to manage, discover and use existing compression software for data rate efficient communication services, etc.

Yet another advantage of the present invention is the possibility to change the level of abstraction for specifying a compression scheme depending on availability of compression schemes. E.g., should a message describing a compression scheme specification not lead to an agreement on the use of a related compression scheme, one could step up one level in abstraction for exchange of a compression class to broaden the range of discoverable compression schemes. Then, one could go back to the level of compression scheme specification having identified one compression scheme according to the class which would be available, followed by the actual compression scheme's implementation that will be used for actually exchanging payload data with the software process.

According to a preferred embodiment, to enable their processes to manage, discover and use existing compression schemes, different types of messages are defined for use by participating software processes. According to the present invention, it is not required that each type of message is exchanged during compression scheme negotiation with a software process, but it is suggested that different types of messages are allowed to indicate compression capability on different levels of instruction. Preferably, the level of instruction is selected according to a compression scheme negotiation state.

Here, an advantage is that it is not required that each type of message is exchanged during negotiation with a software process. If a compression scheme implementation can be negotiated using only a minimum sequence of two messages, then this is efficient and encouraging according to the present invention. Each message exchange during compression scheme negotiation is used to narrow the final compression scheme implementation used by the software process.

Therefore, the compression scheme negotiation method according to the present invention minimally only requires the specification of a compression scheme specification, where only the specification of the compression scheme is agreed upon and then involved software processes have locally an existing implementation of the specification of the negotiated compression scheme, thus not requiring the exchange of further compression scheme negotiation messages.

According to a preferred embodiment of the present invention, the negotiation of the compression scheme may be achieved not only at the initialization of a software process, but also after start of the software process during runtime thereof.

Therefore, the present invention also supports dynamic re-negotiation of a compression scheme. Depending on the amount of compression gain needed during data communication, it is possible to adapt the compression scheme accordingly for data rate efficient communication and saving of bandwidth.

Also, this preferred embodiment increases flexibility in terms of runtime re-configurability based on available compression software and compression re-negotiation for heterogeneous processes.

Further, at any time during application of a software process it is possible to select the most efficient compression software for the related software process, e.g., for exchange of meta-data or signaling data, etc.

According to yet another preferred embodiment, the compression scheme negotiation framework according to the present invention also supports discovery of a compression implementation for establishment of the communication compression scheme, more preferably also a download of a compression software implementation after a related discovery, e.g., from a compression code repository.

An important advantage of this preferred embodiment of the present invention is an increased flexibility and availability with respect to compression scheme software.

Further, for each software process aiming at a communication on the basis of a communication scheme, the related compression software may be discovered and downloaded in real time for minimization of memory capacity at the device where the software process is installed and initialized. This is particularly useful for mobile devices such as mobile telephones and mobile organizers. Nevertheless, this is also of benefit for non-mobile devices on which the software process may be installed.

According to yet another preferred embodiment of the present invention, there is provided a timeout mechanism for compression scheme negotiation. Further preferably, there is provided a fallback to data communication without application of a compression scheme, and a compression scheme may not be established within the time period set for the timeout mechanism.

Therefore, according to the present invention, there is also considered a situation where a settlement may not be achieved by the compression scheme negotiation. In other words, also in this rare case the software process will not be terminated, through fallback to non-compressed data information exchange. Therefore, leaving the paradigm of necessity of a fixed amount of compression during software process communication, this allows to keep operability of the software process at a maximum level.

According to another preferred embodiment of the present invention there is provided a computer program product directly loadable into the internal memory of a compression scheme negotiation apparatus comprising software code portions for performing the inventive process when the product is run on a processor of the compression scheme negotiation apparatus.

Therefore, the present invention is also provided to achieve an implementation of the inventive method steps on computer or processor systems. In conclusion, such implementation leads to the provision of computer program products for use with a computer system or more specifically a processor comprised in, e.g., a compression scheme negotiation apparatus.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or telephone networks via modems and/or the Internet or other interface devices. It should be understood that such media, when carrying processor readable instructions implementing the inventive concept represent alternate embodiments of the present invention.

### DESCRIPTION OF DRAWING

In the following, the best mode and preferred embodiments of the present invention will be described with reference to the drawing in which:
- Fig. 1: shows a schematic diagram of a compression scheme negotiation apparatus for support of data rate efficient communication between communicating software processes according to the present invention;
- Fig. 2: shows a flowchart of operation for the compression scheme negotiation apparatus shown in Fig. 1;
- Fig. 3: shows a further detailed schematic diagram of the compression scheme communication unit shown in Fig. 1;
- Fig. 4: shows a flowchart of operation of the compression scheme communication unit shown in Fig. 3;
- Fig. 5: illustrates a multiple-state message exchange for compression scheme negotiation on different levels of abstraction;
- Fig. 6: shows a further detailed schematic diagram of the compression scheme establishment unit shown in Fig. 1;
- Fig. 7: shows a flowchart of operation of the compression scheme establishment unit shown in Fig. 6;
- Fig. 8: shows an example of compression scheme re-negotiation scheme during a software process runtime according to the present invention;
- Fig. 9: shows examples of message exchange patterns for compression scheme negotiation according to the present invention;
- Fig. 10: shows a first compression scheme negotiation message sequence diagram according to the present invention;
- Fig. 11: shows a second compression scheme negotiation message sequence diagram according to the present invention; and
- Fig. 12: shows a third compression scheme negotiation message sequence diagram according to the present invention.

### DESCRIPTION OF BEST MODE AND PREFERRED EMBODIMENTS

In the following, the best mode as well as preferred embodiments of the present invention will be explained with reference to the drawing. Insofar as reference is made to specific features of the invention, they may be embodied either in software and/or hardware or any combination thereof.

Further, devices for implementing the inventive compression scheme negotiation method are any type of mobile devices or non-mobile devices, on which software processes are installed, e.g., mobile telephones, mobile organizers, laptop computers, personal computers, network computers, fixed telephones, etc.

Further, the type of software using the compression scheme negotiation method according to the present invention is not restricted to a particular type of software process, as long as communication functionality is integrated into the software process. Typical examples could be, e.g., software applications running on mobile devices for voice, data, and/or multimedia data exchange, software processes of operating systems, software processes running in mobile and non-mobile communication networks, software processes running LAN networks, WAN networks, VPN networks.

Also, the type of software process may be the distributed type, coded in different object and/or non-object oriented programming languages and running in any type of operating system. Insofar as hardware is involved for the realization of specific features of the present invention, this hardware may be either general purpose hardware, e.g., commercially available processors or dedicated application specific hardware.

Generally, the compression scheme negotiation framework according to the present invention is an extensible mechanism responsible of all functionality aspects of the compression scheme negotiation and distribution of related compression software for data rate efficient communication between network software processes. The general compression scheme negotiation framework according to the present invention can be used to ensure that different software processes, written in different programming languages, available in different versions and running under different operating systems, can use the inventive teaching for negotiation and re-configuration of compression schemes during runtime of software processes allowing for data rate efficient communication between the network software processes.

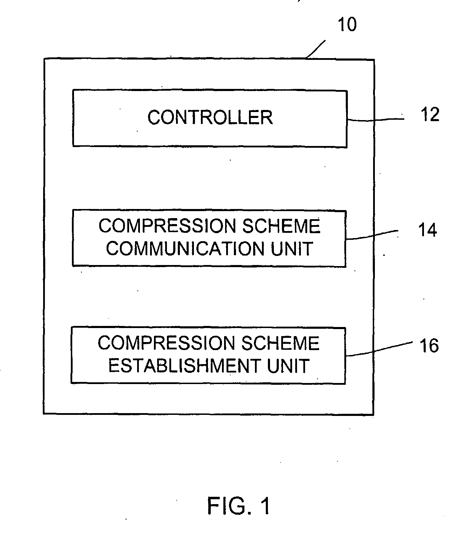

Fig. 1 shows a schematic diagram of a compression scheme negotiation apparatus 10 for support of data rate efficient communication between communicating software processes according to the present invention.

As shown in Fig. 1, the compression scheme negotiation apparatus 10 comprises a controller 12, a compression scheme communication unit 14, and a compression scheme establishment unit 16.

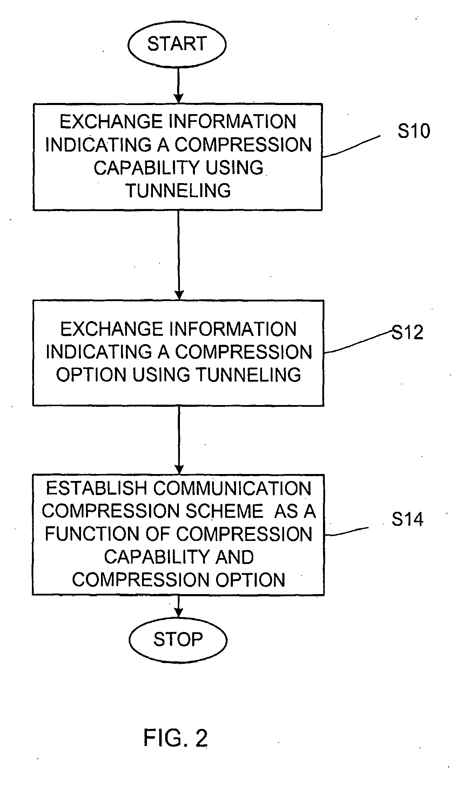

Fig. 2 shows a flowchart of operation of the compression scheme negotiation apparatus shown in Fig. 1.

As shown in Fig. 2, in a step S10, the compression scheme communication unit 14 achieves exchange of information indicating a compression capability of a software process for agreement on a communication compensation scheme. The communication compression scheme will then be used during a subsequent communication with the software process.

According to the present invention, indication of compression capability means messaging of compression related functionality needed for application of a compression scheme during communication with the software process. Typical examples could be, without binding the scope of the present invention, available compression software implementations, an ordered list of compression implementations according to compression gain, a specification of a targeted compression rate, etc.

As shown in Fig. 2, in a step S12, the compression scheme communication unit 14 achieves exchange of a second message indicating a compression option in response to the first message. The exchange of the second message allows for establishing the communication compression scheme to be used during subsequent communication.

Here, it should be noted that a compression option in the sense of the present invention is information with respect to compression capability and available compression schemes at a remote side communicating with the software process initiating the compression scheme negotiation framework. Typical examples of compression options should be similar to those of compression capabilities, as outlined above.

As shown in Fig. 2, in a step S14, the compression scheme establishment unit 16 achieves the establishment of compression schemes as a function of the compression capability and the compression option transmitted with the first and second message, respectively. Here, the functionality is to achieve a best match between the compression scheme capability indicated by the software process and the compression option received in response thereto.

Further to the above, operatively, the controller 12 of the compression scheme negotiation apparatus 10 shown in Fig. 1 is adapted to coordinate and synchronize the different operations of the compression scheme communication unit 14 and the compression scheme establishment unit 16. Further, according to the present invention, the compression scheme communication unit 14 is adapted to encapsulate the first message and the second message, respectively, for compatibility with the transport protocol used for message exchange.

Therefore, the compression scheme communication unit 14 is independent of a particular type of transport protocol, e.g., TCP/IP, UCP/IP, or any other type of networking layer protocol according to, e.g., OSI 3 networking layer, establishing the compression negotiation framework with the underlying transport protocol.

For the reasons of encapsulation or, in other words, for the reasons of tunneling compression scheme negotiation related messages, the compression scheme negotiation framework according to the present invention is independent of the applied transport layer protocol.

In the most general sense, tunneling according to the present invention describes an inter-operation of two different protocols on the same layer of the OSI reference model, where data of one protocol are again encapsulated into data packets of the other protocol, so that the same layer of the OSI reference model is passed twice. This allows for a transition from one protocol to another and therefore for the loosely coupling of the framework to the transport layer protocol as outlined above.

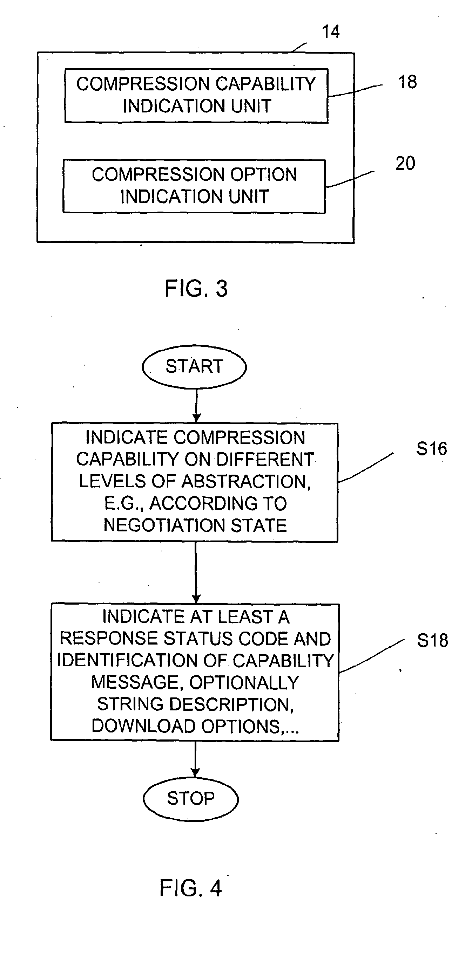

Fig. 3 shows a further detailed schematic diagram of the compression scheme communication unit 14 shown in Fig. 1.

As shown in Fig. 3, the compression scheme communication unit 14 comprises a compression capability indication unit 18 and a compression option indication unit 20. Here, it should be noted that, while Fig. 3 shows the compression capability indication unit 18 and the compression option indicating unit 20 as integrated into the compression scheme communication unit 14, both components may as well be distributed.

As long as both sub-units are provided in the compression scheme communication unit 14, the related compression scheme negotiation apparatus is adapted to support by-directional message exchange with respect to compression scheme negotiation.

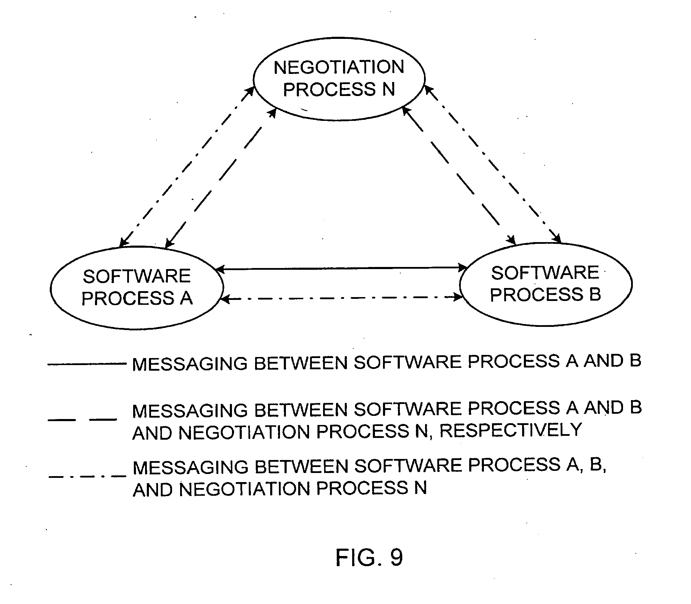

However, in a distributed environment one may consider the provision of compression capabilities through one software process only not being further involved into the compression negotiation, and the provision of the compression option could be achieved by another software process, as will be outlined in more detail in the following with reference to Fig. 9.

Fig. 4 shows a flowchart operation with the compression scheme communication unit 14 shown in Fig. 3.

As shown in Fig. 4, in a step S16 the compression capability indication unit 18 will indicate compression capability on different levels of abstraction. As will explained in more detail in the following, the level of abstraction for indication of compression capability is selected, e.g., according to the negotiation state for the compression scheme negotiation process.

As shown in Fig. 4, in a step S18, the compression option indication unit 20 will indicate at least a response status code and an identification of the capability message. Here, the identification of the capability message serves to indicate to the calling software process that this is a response to the compression capability indication previously transmitted and to establish a relation of compression capability and an indication of related compression options.

Further, the response status code indicates whether a certain indication of compression capability is met by a further software process for subsequent application of the related compression scheme during communication.

Further, the indication of options for application of a compression scheme may also comprise string descriptions, download options for compression software, etc., as will be explained in more detail in the following.

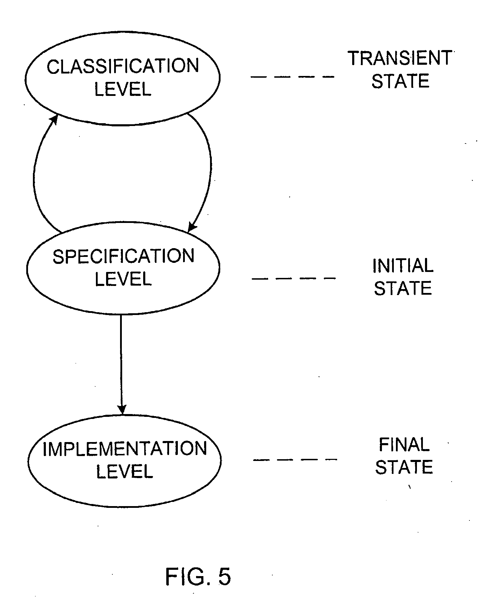

Fig. 5 shows in more detail the multiple-state message exchange for compression scheme negotiation on different levels of abstraction referred to above.

As shown in Fig. 5, according to the present invention, different levels of abstraction to identify compression schemes are a classification level, a specification level, and an implementation level.

Here, the classification level is the most abstract description of a compression scheme as specifying a certain class, e.g., compression schemes reducing redundancy, compressing schemes reducing redundancy and irrelevant information, symmetric compression, asymmetric compression, compression schemes ignoring irrelevant information, compression schemes using information on the data to be exchanged, fractal compression, Huffman coding, Wavelet compression, GIF, JBG, JPEG, PNG, MJPEG, MPEG, Musicam. Here, it should be noted that the given examples of compression classes are illustrative only and that any type of classification is covered by the present invention.

A further level of abstraction is the specification level used for identification of a compression scheme on a specification level, i.e. the name of a specific compression algorithm, as example.

Yet another level of abstraction is the implementation level, which allows to refer to an operable compression software code for subsequent initialization thereof.

As shown in Fig. 5, typically the present invention will have as initial negotiation state the indication of a compression capability on the specification level. If the response to the indication of the capability shows availability of a related compression scheme at the side of the communication partner, the next step will be the identification of a specific compression scheme implementation, i.e. a related piece of software.

Otherwise, one might consider to increase the degree of abstraction for agreement on a compression scheme, i.e. to move to the classification level for agreement on a compression scheme to be applied. Following this negotiation state transition, there follows the step-wise reduction of degree of abstraction from the classification level to the specification level to the implementation level. Here, the implementation level will be the final negotiation state allowing for initialization of a specific compression scheme implementation.

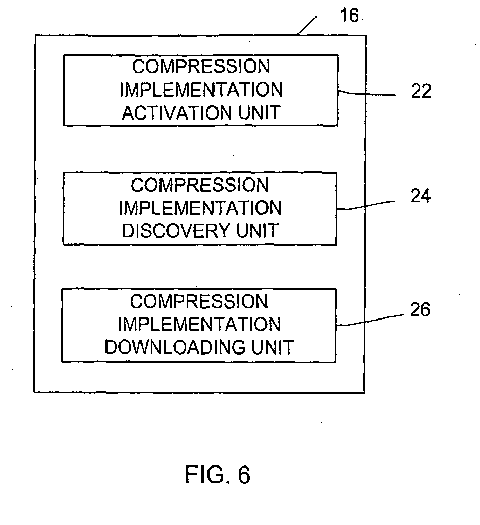

Fig. 6 shows a schematic diagram of the compression scheme establishing unit 16 shown in Fig. 1.

As shown in Fig. 6, the compression scheme establishment unit comprises a compression implementation activation unit 22, a compression implementation discovery unit 24, and a compression implementation downloading unit 26.

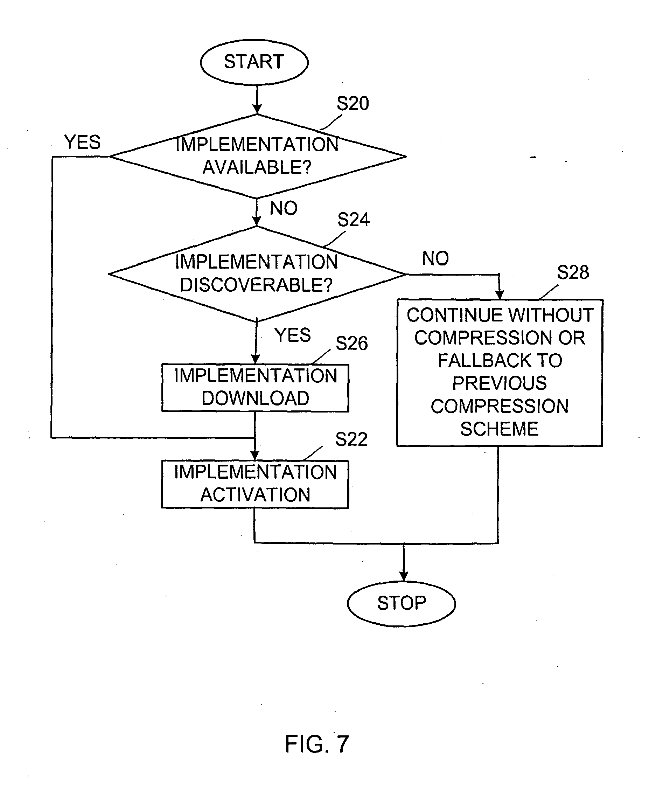

Fig. 7 shows a flowchart of operation of the compression scheme establishment unit 16 shown in Fig. 6.

As shown in Fig. 7, in a step S20 the compression implementation activation unit will determine whether a specific compression scheme implementation, generated as outcome of the compression scheme negotiation process, is available for the software process initiating the compression scheme negotiation process. In the affirmative case, the compression implementation activation unit will execute a step S22 to activate the negotiated compression scheme implementation.

As shown in Fig. 7, if the interrogation in step S20 is negative, the compression implementation discovery unit 24 will be activated for interrogation whether a negotiated compression scheme implementation is discoverable, e.g., either locally at the processing node where the software process initiating the compression scheme negotiation resides, or remotely at another processing node communicating with the processing node where the software process initiating the compression scheme negotiation resides.

As shown in Fig. 7, if the interrogation in step S24 is affirmative, then the compression implementation downloading unit 26 will execute a step S26 for download of a compression scheme implementation before subsequent activation thereof in the step S22. Otherwise, if the interrogation in step S24 is negative, then there follows a step S28 executed by the controller 12 shown in Fig. 1 to continue the communication process with the software process that initiated the compression scheme negotiation without compression at all. Another option would be to activate a fallback to a previously established compression scheme.

Further to the above, it should be noted that the coordination of the different functional units and processing and operation steps explained with respect to Figs. 1 to 7 is achieved by the controller 12 of the compression scheme negotiation apparatus 10 shown in Fig. 1.

Besides the functionality explained so far, the controller 12 of the compression negotiation apparatus 10 is also adapted to iterate the different steps explained so far several times, e.g., for compression scheme re-negotiation during the software process runtime.

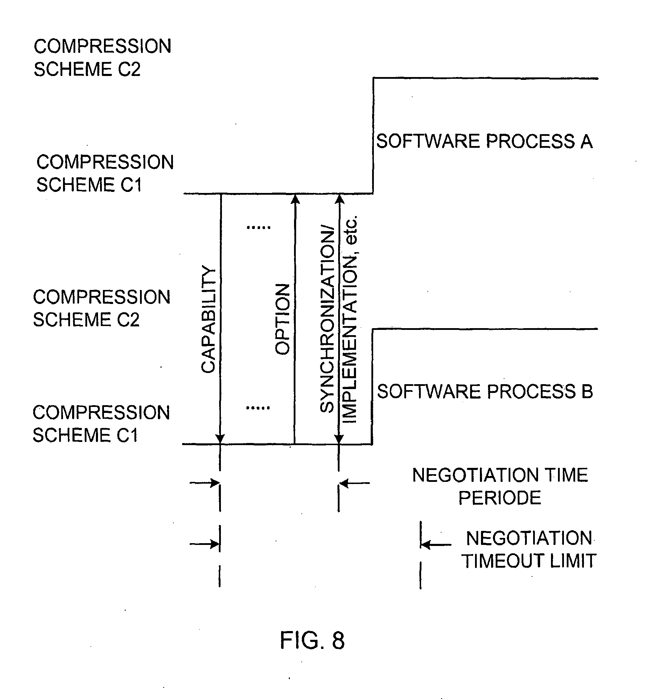

Fig. 8 shows an example of such a compression scheme re-negotiation during runtime of the software process according to the present invention.

For the example shown in Fig. 8 it is assumed that two different software processes A and B communicate with each other, initially using a compression scheme C1. Here, at the beginning of a time period for compression scheme re-negotiation, e.g., the software process A may forward a message indicating the compression capabilities, as outlined above. Then follows a response message indicating compression options. The process of a message exchange may be iterated several times to achieve compression scheme negotiation settlement. Hereafter, and assuming that the outcome of the compression scheme negotiation is a compression scheme C2, there follows the activation of related implementations in a synchronized manner before change of the applied compression scheme from C1 to C2.

Fig. 8 also illustrates that according to the present invention, the controller 12 shown in Fig. 1 is adapted to apply a timeout limit mechanism to compression scheme negotiations. The application of a timeout mechanism allows to minimize downtime of current operating communicating software processes, which is of particular importance for real-time type software applications. Further, another advantage is that the negotiation time period is not extended unnecessarily, when it may be foreseen that no negotiation settlement may be achieved.

Fig. 9 shows examples of message exchange patterns for compression scheme negotiation according to the present invention.

As shown in Fig. 9, a typical application scenario for the compression scheme negotiation framework according to the present invention is the exchange of the first message for compression capability indication and the second message for compression option indication between a first software process A and a second software process B. A second typical example would be the involvement of a mediating compression scheme negotiation process N which communicates, both, with the software process A and the software process B. Here, the indication of compression capability would be forwarded from software process A to the negotiation process N, which may then communicate with the software process B for indication of appropriate compression options back to the software process A.

Yet another application scenario would be that the software process A indicates compression capability to the negotiation process N, which then settles the compression negotiation with the software process B. Finally, the software process B indicates compression options to the software process A.

While above the different messages for compression capability and option indication have been referred to, in the following more details with respect to these messages will be explained. As outlined above, these messages are related to compression scheme negotiation on different levels on abstraction, so that these messages typically relate to the class, specification, and implementation level of abstraction for compression scheme negotiation.

Therefore, a first message is a compression class message containing information that announces the existence of a class of compression scheme. The elements of the compression class message as given in the following table may be classified as mandatory or optional. Further, while in the following reference is made to a uniform resource identifier, it should be clear that any other indication of related information is well covered by the scope of the present invention. In view of this, elements of a compression class message may be:

| | | |
|---|---|---|
| CompressionClassID | Mandatory | A Uniform Resource Identifier (URI)that contains information uniquely identifying a class of compression scheme |
| Name | Optional | A convenient text string, of variable length, used as a name of the class |
| Description | Optional | A convenient text string, of variable length, used as a description of the class |

A further message is the compression specification message referred to as first message in the claims to follow. The compression specification message contains information that uniquely identifies a compression scheme specification. The elements of the compression specification message may be:

| | | |
|---|---|---|
| CompressionSpecID | Mandatory | A Uniform Resource Identifier (URI) that contains information that uniquely identifies a compression scheme specification. This URI contains the CompressionClassID. |
| CompatibilityID | Mandatory | A URI used to define the compatibility of the specification to a language and version |
| Name | Optional | A convenient text string, of variable length, used as a name of the specification |
| Description | Optional | A convenient text string, of variable length, used as a description of the specification |
| Creator | Mandatory | A URI used to define the creator of the specification |
| Compression Specification DocID | Optional | A URI used to download the specification document |
| Revision | Optional | A text string of an integer value of the revision of this specification |
| Parameters | Optional | A text string of a list of parameters to be used by an implementation of this specification |
| Authenticator | Optional | A URI used to identify an authenticator for this specification |

Yet another example of indication compression capability is the use of a compression implementation message which is used to provide information about a particular implementation of a compression specification, such as a package URI containing source code implementing the compression specification in the case that one of the negotiating processes requires an implementation at runtime. The elements of the compression implementation message are:

| | | |
|---|---|---|
| Compression | Mandatory | A Uniform Resource Identifier (URI) that contains information that uniquely identifies a compression scheme specification implementation. |
| CompatibilityID | Mandatory | A URI used to define the compatibility of the implementation to an execution environment |
| Name | Optional | A convenient text string, of variable length, used as a name of the implementation |
| Description | Optional | A convenient text string, of variable length, used as a description of the implementation |
| Creator | Mandatory | A URI used to define the creator of the implementation |
| CompressionSpecID | Mandatory | A URI uniquely identifies the specification being implemented |
| CodeID | Mandatory | A URI used to download the code of this implementation |
| Parameters | Optional | A text string of a list of arbitrary parameters to be interpreted by the implementation's code |
| Authenticator | Optional | A URI used to identify an authenticator for this implementation |

A further message is related to indication of compression option and may therefore be referred to as compression response message containing the response to the message indicating compression capability. The elements of the compression response message may be:

| | | |
|---|---|---|
| Result | Mandatory | Status Code [ACK_CONT, NACK_CONT, ACK_CPLT, NACK_CPLT, etc.] |
| RequestMessageID | Mandatory | A Uniform Resource Identifier (URI) that contains one of [CompressionIMPID, CompressionSpecID, CompressionClassID] |
| Description | Optional | A convenient text string, of variable length, used as a description of the result |

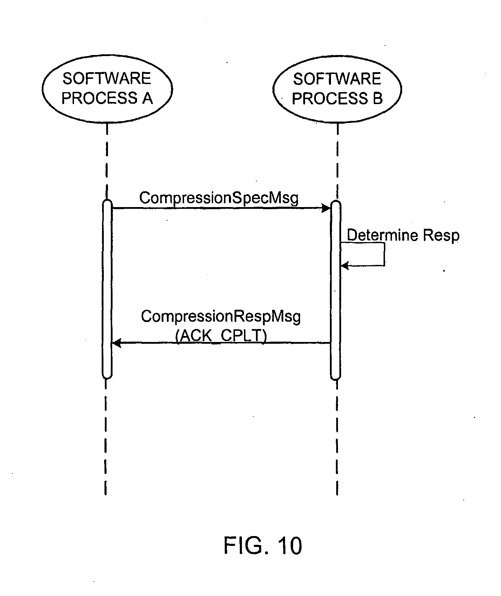

In view of the above, the following Figs. 10-12 show a sample of message sequences considered as example only and as non-binding on the scope of the present invention. In particular, messages are exchanged between two participating software processes A and B, using the compression scheme negotiation method and apparatus according to the present invention.

Fig. 10 shows a first example of a compression scheme negotiation message sequence diagram. According to this example, there is shown a minimal constellation for compression scheme negotiation, where a first software process A forwards the specification message, the second software process B determines the response and acknowledges the indicated compression specification back to software process A.

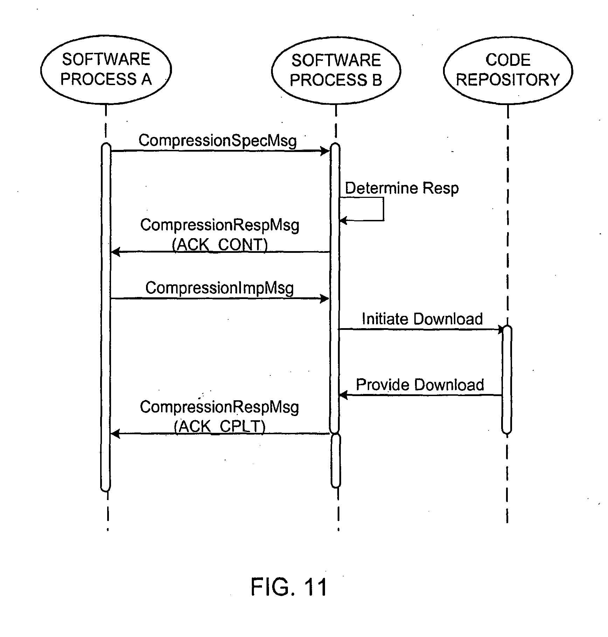

Fig. 11 shows a second example of a compression scheme negotiation messages sequence diagram. This example differs over the first example in that also the compression implementation is negotiated between software process A and software process B. Further, there is shown a download initialization and a download of compression software from a current depository to the software process B, assuming the case that the selected implementation is not available for the software process B before start of the compression scheme negotiation.

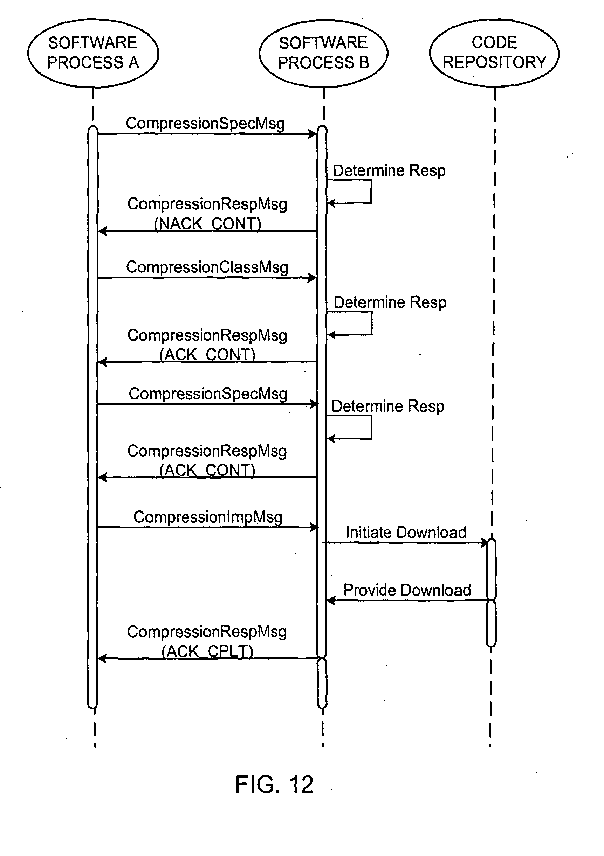

Fig. 12 shows a third example of a compression scheme negotiation message sequence according to the present invention. Here, this example relates to the transition over a plurality of abstraction levels as outlined above with respect to Fig. 3. Initially, software process A exchanges a compression specification message in a related response which indicates the non-acknowledgement and the expectation to continue with the negotiation process to the software process A. The software process A then proceeds with a high level of abstraction through the compression class message. The software process B determines a response and acknowledges the indicated class and requests the software process A to continue. Then, the software process A will again step back to the specification level of abstraction and forward a second specification message. Then, the software process B determines a response and, e.g., indicates acknowledgement and the expectation to continue with the negotiation process to the software process A. The software process A then steps down to the implementation level of abstraction and forwards a related message to software process B. Assuming that a related implementation is not available for the software process B, one may execute a download from a code depository as explained with reference to Fig. 12 and then send a response indicating acknowledgement and the request to continue with the compression scheme settled during the negotiation at the compression scheme.

In the following, a further detailed example, without limiting scope of invention, will be explained with respect to the JXTA, http:/www.JXTA.org., which is a set of protocol messages which is independent of the transport protocol and may form a basis for exemplifying the preferred embodiments of the present invention as outlined above.

JXTA is a discovery protocol that would benefit from the present invention. There is chosen a peer-to-peer P2P protocol as an example, also referred to as P2P in the following, because in a P2P protocol the overall signaling load is comparatively high, due to the very distributed communication and routing schemes of P2P protocols.

Additionally, in JXTA overhead inefficiencies are very prevalent, primarily by the extensive use of XML meta-data for passing of JXTA protocol messages. The measured overhead cost only by XML may typically account for nearly 50% of the entire user data packet, before taking into account the additional TCP/IP and HTTP overhead. Therefore, according to the JXTA discovery protocol, the entire size of a single message transmitted could be reduced by half, if XML meta-data for parsing were omitted and data was transmitted, e.g., in fixed byte orders, as outlined, e.g., in MPP.

The usage of plain text without additional XML meta-data would significantly reduce the size of the overhead. Additionally, if the removal of XML meta-data is not an option, another significant decrease in the message size can be achieved using string compression techniques on transmitted use data. Using string compression reduces the overhead by an average of 40% to 50%, thereby showing a significant impact on the signaling load of the JXTA discovery protocol and other common P2P protocols.

Therefore, according to the present invention, there is proposed the application of compression schemes to JXTA discovery protocol messages containing XML meta-data instead of removing XML meta-data to maintain flexibility of XML parsing in the JXTA discovery protocol. The use of compression schemes in P2P signaling requires that both processes use the same compression scheme for interoperability, which is exactly supported by the present invention. According to the JXTA discovery protocol, the significant part of flexibility would be lost if one specific compression scheme were mandatory. Therefore, according to the present invention, the solution is an extension to the JXTA discovery protocol.

In more detail, it is possible to employ the JXTA discovery protocol welcome message to include the compression negotiation and reconfiguration mechanism for agreement on the compression scheme to be used, as outlined above.

According to the JXTA discovery protocol, the binary welcome message is the first message which is exchanged between two JXTA end points or related software processes after establishment of a TCP/IP connection. The binary welcome message is sent by both software processes for exchange of, e.g., end point addresses, mapped on TCP/IP of both software processes.

Further, the binary welcome message offers the possibility to send an interrogation whether a JXTA software process is active, so that any network node may evaluate whether the communication is established correctly. Therefore, a JXTA software process should send this message as soon as possible and may not send any other message before it receives the welcome message of the opposite software process.

Within the framework of the present invention, the welcome message is defined to be human readable. This simplifies debugging and additionally a web browser or even telnet may be used to establish a JXTA connection. The <welcomedest> field is used to define the address of the demanded target node. If no target node is specified, this value should be set to default. Accordingly, the field <welcomeaddr> is used to specify the public IP address, which initiates the connection. Further, the field <welcomeProcess> specifies the process ID of this process. With the field <noprop> the process can specify whether it wants to receive broadcast messages (val=0) or not (val=1).

To support compression, according to the present invention it is proposed to extend the JXTA welcome message by adding two fields length of compression tunnel message <LCCM> and compression tunnel message <CCM>.

The field <LCCM> specifies the length value of the following compression class message in bytes, whereas the <CCM> field lists all supported compression schemes of the process sending the welcome message according to the definition of the compression class message. The compression schemes, supported by the node, are stated with their CompressionClassIDs in the list according to the definition of the compression class message. They are separated in the list by one ?-character, so that each compression scheme can be detected automatically. The list of compression schemes is an ordered list, starting with the compression scheme having highest compression gain. Therefore, the JXTA welcome message includes all mandatory messages of the inventive compression scheme negotiation framework as outlined above.

As soon as one of the JXTA software processes receives the extended welcome message, it selects the first compression scheme supported by the receiving node from the list received. Therefore, the best compression scheme supported by all JXTA software processes is selected automatically and can be used to compress all outgoing JXTA messages during subsequent communication. If no compression scheme supported by both JXTA software processes may be found, the software processes fall back to default plain XML transmission scheme.

Using the extension as outlined above results in a saving up to 60% of overhead generated by a non-compressed JXTA communication process, without constraining the flexibility added by XML meta-data to the JXTA discovery protocol. Therefore, the JXTA discovery protocol may be employed even with narrow bandwidth connections as they are found, e.g., in mobile communication environments.

## Claims

1. Compression scheme negotiation method for data rate efficient communication between communicating software processes, comprising the steps:
exchanging a first message indicating compression capability of a software process for agreement on a communication compressing scheme to be used during a subsequent communication with the software process;
exchanging a second message indicating a compression option in response to the first message for establishing the communication compressing scheme to be used during subsequent communication as a function of the compression capability and the compression option;
***characterized in that***
the first message and the second message are encapsulated for compatibility with the transport protocol used for message exchange; and
that the first message indicates compression capability on different levels of abstraction according to compression class including compression schemes reducing redundancy, compression schemes reducing redundancy and irrelevant information, symmetric compression, asymmetric compression, compression schemes ignoring irrelevant information, compression schemes using information on the data to be exchanged, fractal compression, Huffman coding, Wavelet compression, GIF, JBG, JPEG, PNG, MJPEG, MPEG, Musicam. compression specification being the name of a specific compression algorithm, or compression implementation being the reference to an operable compression software code.

2. Method according to claim 1, **characterized in that** the first message indicates compression schemes supported by the software process as ordered list according to compression gain.

3. Method according to claim 1, **characterized in that** the first message indicates compression capability according to compression class through a compression class identifier.

4. Method according to claim 1, **characterized in that** the first message indicates compression capability according to compression specification through a compression specification identifier.

5. Method according to claim 1, **characterized in that** the first message indicates compression capability according to compression implementation through a compression implementation identifier.

6. Method according to one of the claims 1 to 5, **characterized in that** the second message indicating a compression option comprises at least a response status code and an identification of the first message.

7. Method according to one of the claims 1 to 6, **characterized in that** the first message and the second message are exchanged during runtime of the software process.

8. Method according to one of the claims 1 to 7, **characterized in that** it comprises a step of activating a compression implementation for establishing the communication compression scheme.

9. Method according to one of the claims 1 to 7, **characterized in that** it comprises a step of discovering a compression implementation for establishing the communication compression scheme by downloading a compression implementation for establishing the communication compression scheme.

10. Method according to one of the claims 1 to 9, **characterized in that** it further comprises a step of activating a time out mechanism at a start of the compression scheme negotiation.

11. Method according to one of the claims 1 to 10, **characterized in that** it comprises the step of fallback to data communication without application of a compression scheme when a compression scheme may not be established.

12. Compression scheme negotiation apparatus for support of data rate efficient communication between communicating software processes, comprising:
- a compression scheme communication unit
-- adapted to exchange a first message indicating compression capability of a software process for agreement on a communication compressing scheme to be used during a subsequent communication with the software process; and
-- adapted to exchange a second message indicating a compression option in response to the first message for establishing the communication compressing scheme to be used during subsequent communication;
***characterized by***
- a compression scheme establishing unit adapted to establish a compression scheme as a function of the compression capability and the compression option; and
adapted to encapsulate the first message and the second message for compatibility with the transport protocol used for message exchange; and a compression capability indication unit is adapted to set up the first message for indication of compression capability on different levels of abstraction according to compression class including compression schemes reducing redundancy, compression schemes reducing redundancy and irrelevant information, symmetric compression, asymmetric compression, compression schemes ignoring irrelevant information, compression schemes using information on the data to be exchanged, fractal compression, Huffman coding, Wavelet compression, GIF, JBG, JPEG, PNG, MJPEG, MPEG, Musicam, compression specification being the name of a specific compression algorithm, or compression implementation being the reference to an operable compression software code.

13. Apparatus according to claim 12, **characterized in that** the compression capability indication unit adapted to set up the first message for indication of compression schemes supported by the software process as ordered list according to compression gain.

14. Apparatus according to claim 12, **characterized in that** the compression capability indication unit is adapted to set up the first message for indication of compression capability according to compression class through a compression class identifier.

15. Apparatus according to claim 12, **characterized in that** the compression capability indication unit is adapted to set up the first message for indication of compression capability according to compression specification through a compression specification identifier.

16. Apparatus according to claim 12, **characterized in that** the compression capability indication unit is adapted to set up the first message for indication of compression implementation with a compression implementation identifier.

17. Apparatus according to one of the claims 12 to 16, **characterized in that** it comprises a compression option indication unit adapted to set up the second message for indication of at least a response status code and an identification of the first message.

18. Apparatus according to one of the claims 12 to 17, **characterized in that** the compression scheme communication unit is adapted to exchange the first message and the second message during runtime of the software process.

19. Apparatus according to one of the claims 12 to 18, **characterized in that** it comprises a compression implementation activation unit adapted to activate a compression implementation for establishing the communication compression scheme.

20. Apparatus according to one of the claims 12 to 18, **characterized in that** it comprises a compression implementation discovery unit adapted to discover a compression implementation for establishing the communication compression scheme by downloading a compression implementation for establishing the communication compression scheme.

21. Apparatus according to one of the claims 12 to 20, **characterized in that** it further comprises a controlling unit adapted to activate a time out mechanism at a start of the compression scheme negotiation.

22. Apparatus according to one of the claims 12 to 21, **characterized in that** the controlling unit is adapted to initiate fallback to data communication without application of a compression scheme when a compression scheme may not be established.

23. Computer program product directly loadable into the internal memory of a compression scheme negotiation apparatus, comprising software code portions for performing the steps of one of the claims 1 to 11, when the product is run on a processor of the compression scheme negotiation apparatus.

## Patentansprüche

1. Kompressionsschema-Aushandelverfahren für eine Datenrate-effiziente Kommunikation zwischen kommunizierenden Software-Prozessen, umfassend die Schritte:
Austauschen einer ersten Nachricht, kennzeichnend eine Kompressionsfähigkeit eines Software-Prozesses, für ein Übereinstimmen hinsichtlich eines zu verwendenden Kommunikationskompressionsschemas während einer nachfolgenden Kommunikation mit dem Software-Prozess;
Austauschen einer zweiten Nachricht, kennzeichnend eine Kompressionsoption in Ansprechen auf die erste Nachricht zum Erstellen des Kommunikationskompressionsschemas, das zu verwenden ist während einer nachfolgenden Kommunikation als Funktion der Kompressionsfähigkeit und der Kompressionsoption;
**dadurch gekennzeichnet, dass**
die erste Nachricht und die zweite Nachricht eingeschlossen bzw. eingekapselt sind für eine Kompatibilität mit dem Transportprotokoll, das für einen Nachrichtenaustausch verwendet wird; und
dass die erste Nachricht eine Kompressionsfähigkeit auf verschiedenen Niveaus der Abstraktion kennzeichnet gemäß Kompressionsklassen, enthaltend Kommpressionsschema, die eine Redundanz reduzieren, Kommpressionsschema, die eine Redundanz und irrelevante Information reduzieren, symmetrische Kommpression, asymmetrische Kommpression, Kommpressionsschema, die irrelevante Information ignorieren, Kommpressionsschema, die Information hinsichtlich auszutauschender Daten verwenden, fraktale Kommpression, Huffman-Coding, Wavelet-Kommpression, GIF, JBG, JPEG, PNG, MJPEG, MPEG, Musicam, Kommpressionsspezifikation, die der Name eines spezifischen Kommpressionsalgorithmus ist, oder Kommpressionsimplementierung, welches die Referenz auf einen betriebsfähigen Kompressions-Software-Code ist.

2. Verfahren nach Anspruch 1, **dadurch gekennzeichnet, dass** die erste Nachricht Kommpressionsschema kennzeichnet, die unterstützt werden durch den Software-Prozess als geordnete Liste gemäß der Kommpressionsverstärkung.

3. Verfahren nach Anspruch 1, **dadurch gekennzeichnet, dass** die erste Nachricht eine Kommpressionsfähigkeit kennzeichnet gemäß Kommpressionsklassen durch einen Kommpressionsklassenidentifizierer.

4. Verfahren nach Anspruch 1, **dadurch gekennzeichnet, dass** die erste Nachricht eine Kommpressionsfähigkeit kennzeichnet gemäß Kommpressionsspezifikation durch einen Kommpressionsspezifikationsidentifizierer.

5. Verfahren nach Anspruch 1, **dadurch gekennzeichnet, dass** die erste Nachricht eine Kommpressionsfähigkeit kennzeichnet gemäß einer Kommpressionsimplementierung durch einen Kommpressionsimplementierungsidentifizierer.

6. Verfahren nach einem der Ansprüche 1 bis 5, **dadurch gekennzeichnet, dass** die zweite Nachricht, die eine Kommpressionsoption kennzeichnet, mindestens einen Antwortstatuscode und eine Identifizierung der ersten Nachricht umfasst.

7. Verfahren nach einem der Ansprüche 1 bis 6, **dadurch gekennzeichnet, dass** die erste Nachricht und die zweite Nachricht ausgetauscht werden während der Laufzeit des Software-Prozesses.

8. Verfahren nach einem der Ansprüche 1 bis 7, **dadurch gekennzeichnet, dass** es einen Schritt eines Aktivierens einer Kommpressionsimplementierung umfasst zum Einrichten des Kommunikationskompressionsschemas.

9. Verfahren nach einem der Ansprüche 1 bis 7, **dadurch gekennzeichnet, dass** es einen Schritt umfasst eines Entdeckens einer Kommpressionsimplementierung zum Einrichten des Kommunikationskompressionsschemas durch Herunterladen einer Kommpressionsimplementierung zum Einrichten des Kommunikationskompressionsschemas.

10. Verfahren nach einem der Ansprüche 1 bis 9, **dadurch gekennzeichnet, dass** es ferner einen Schritt eines Aktivierens eines Auszeitmechanismus umfasst bei einem Start der Kommpressionsschemaaushandlung.

11. Verfahren nach einem der Ansprüche 1 bis 10, **dadurch gekennzeichnet, dass** es den Schritt umfasst eines Zurückfallens auf eine Datenkommunikation ohne Anwendung eines Kommpressionsschemas, wenn ein Kommpressionsschema nicht eingerichtet werden kann.

12. Kompressionsschema-Aushandelvorrichtung zum Unterstützen einer Datenrate-effizienten Kommunikation zwischen kommunizierenden Software-Prozessen, umfassend:
- Eine Kompressionsschema-Kommunikationseinheit
-- ausgebildet zum Austauschen einer ersten Nachricht, die eine Kompressionsfähigkeit eines Software-Prozesses kennzeichnet, für ein Übereinstimmen hinsichtlich eines Kommunikationskompressionsschemas, das zu verwenden ist während einer nachfolgenden Kommunikation mit dem Software-Prozess; und
-- ausgebildet zum Austauschen einer zweiten Nachricht, die eine Kompressionsoption kennzeichnet, in Ansprechen auf die erste Nachricht zum Einrichten des zu verwendenden Kommunikationskompressionsschemas während einer nachfolgenden Kommunikation;
**gekennzeichnet durch**
- eine Kommpressionsschema-Einrichtungseinheit, ausgebildet zum Einrichten eines Kommpressionsschemas als eine Funktion der Kommpressionsfähigkeit und der Kommpressionsoption; und
ausgebildet zum Einkapseln bzw. Einschließen der ersten Nachricht und der zweiten Nachricht für eine Kompatibilität mit dem Transportprotokoll, das für einen Nachrichtenaustausch verwendet wird; und
eine Kommpressionsfähigkeits-Kennzeichnungseinheit ist ausgebildet zum Einrichten der ersten Nachrichtung für einen Hinweis auf eine Kompressionsfähigkeit auf verschiedenen Niveaus der Abstraktion gemäß Kompressionsklassen, einschließlich Kommpressionsschema, die eine Redundanz verringern bzw. reduzieren, Kommpressionsschema, die eine Redundanz und irrelevante Information reduzieren, symmetrische Kommpression, asymmetrische Kommpression, Kommpressionsschema, die irrelevante Information ignorieren, Kommpressionsschema, die Information hinsichtlich auszutauschender Daten verwendet, fraktale Kommpression, Huffman-Coding, Wavelet-Kommpression GIF, JBG, JPEG, PNG, MJPEG, MPEG, Musicam, Kommpressionsspezifikation, die der Name eines spezifischen Kommpressionsalgorithmus ist, oder Kommpressionsimplementierung, die die Referenz auf einen betriebsfähigen Kompressions-Software-Code ist.

13. Vorrichtung nach Anspruch 12, **dadurch gekennzeichnet, dass** die Kompressionsfähigkeits-Kennzeichnungseinheit ausgebildet ist zum Einstellen der ersten Nachricht zur Kennzeichnung von Kommpressionsschema, die unterstützt werden durch den Software-Prozess als geordnete Liste gemäß der Kommpressionsverstärkung.

14. Vorrichtung nach Anspruch 12, **dadurch gekennzeichnet, dass** die Kommpressionsfähigkeits-Kennzeichnungseinheit ausgebildet ist zum Einrichten der ersten Nachricht zum Kennzeichnen einer Kommpressionsfähigkeit gemäß einer Kommpressionsklasse durch einen Kommpressionsklassenidentifizierer.

15. Vorrichtung nach Anspruch 12, **dadurch gekennzeichnet, dass** die Kommpressionsfähigkeits-Kennzeichnungseinheit ausgebildet ist zum Einrichten der ersten Nachricht zur Kennzeichnung einer Kommpressionsfähigkeit gemäß einer Kommpressionsspezifizierung durch einen Kommpressionsspezifizierungsidentifizierer.

16. Vorrichtung nach Anspruch 12, **dadurch gekennzeichnet, dass** die Kommpressionsfähigkeits-Kennzeichnungseinheit ausgebildet ist zum Einrichten der ersten Nachricht für eine Kennzeichnung der Kommpressionsimplementierung mit einem Kommpressionsimplementierungsidentifizierer.

17. Vorrichtung nach einem der Ansprüche 12 bis 16, **dadurch gekennzeichnet, dass** sie umfasst eine Kommpressionsoptions-Kennzeichnungseinheit, ausgebildet zum Einrichten der zweiten Nachricht für eine Kennzeichnung von mindestens einem Antwortstatuscode und einer Identifizierung der ersten Nachricht.

18. Vorrichtung nach einem der Ansprüche 12 bis 17, **dadurch gekennzeichnet**, die Kommpressionsschema-Kommunikationseinheit ausgebildet ist zum Austauschen der ersten Nachricht und der zweiten Nachricht während einer Laufzeit des Software-Prozesses.

19. Vorrichtung nach einem der Ansprüche 12 bis 18, **dadurch gekennzeichnet, dass** sie umfasst eine Kommpressionsimplementierungs-Aktivierungseinheit, ausgebildet zum Aktivieren einer Kommpressionsimplementierung zum Einrichten des Kommunikationskompressionsschemas.

20. Vorrichtung nach einem der Ansprüche 12 bis 18, **dadurch gekennzeichnet, dass** sie umfasst eine Kommpressionsimplementierungs-Entdeckungseinheit, ausgebildet zum Entdecken einer Kommpressionsimplementierung zum Einrichten des Kommunikationskompressionsschemas durch Herunterladen einer Kommpressionsimplementierung zum Einrichten des Kommunikationskompressionsschemas.

21. Vorrichtung nach einem der Ansprüche 12 bis 20, **dadurch gekennzeichnet, dass** sie ferner eine Steuereinheit umfasst, ausgebildet zum Aktivieren eines Auszeitmechanismus bei einem Start der Kommpressionsschemaaushandlung.

22. Vorrichtung nach einem der Ansprüche 12 bis 21, **dadurch gekennzeichnet, dass** die Steuereinheit ausgebildet ist zum Initiieren eines Zurückfallens auf eine Datenkommunikation ohne Anwendung eines Kommpressionsschemas, wenn ein Kommpressionsschema nicht eingerichtet werden kann.

23. Computerprogrammprodukt, das direkt ladbar ist in den internen Speicher einer Kommpressionsschema-Aushandlungsvorrichtung, umfassend Software-Code-Teile zum Ausführen der Schritte von einem der Ansprüche 1 bis 11, wenn das Produkt auf einem Prozessor der Kommpressionsschema-Aushandlungsvorrichtung läuft.

## Revendications

1. Procédé de négociation de schéma de compression pour une communication efficace en ce qui concerne le débit entre des processus logiciels communiquant, comprenant les étapes consistant à :
échanger un premier message indiquant une capacité de compression d'un processus logiciel pour s'accorder sur un schéma de compression de communication à utiliser pendant une communication suivante avec le processus logiciel ;
échanger un second message indiquant une option de compression en réponse au premier message pour établir le schéma de compression de communication à utiliser pendant une communication suivante comme une fonction de la capacité de compression et de l'option de compression ;
***caractérisé en ce que***
le premier message et le second message sont encapsulés pour la compatibilité avec le protocole de transport utilisé pour l'échange de message ; et
le premier message indique une capacité de compression sur des niveaux différents d'abstraction selon la catégorie de compression comprenant des schémas de compression réduisant la redondance, des schémas de compression réduisant la redondance et les informations non pertinentes, la compression symétrique, la compression asymétrique, des schémas de compression ignorant les informations non pertinentes, des schémas de compression utilisant des informations concernant les données à échanger, la compression fractale, le codage de Huffman, la compression par ondelettes, GIF, JBG, JPEG, PNG, MJPEG, MPEG, Musicam, selon la spécification de compression qui est le nom d'un algorithme de compression spécifique, ou selon la mise en oeuvre de la compression qui est la référence à un code logiciel de compression pouvant être mis en oeuvre.

2. Procédé selon la revendication 1, **caractérisé en ce que** le premier message indique des schémas de compression supportés par le processus de logiciel en tant que liste ordonnée selon le gain de compression.

3. Procédé selon la revendication 1, **caractérisé en ce que** le premier message indique une capacité de compression selon la catégorie de compression par l'intermédiaire d'un identificateur de catégorie de compression.

4. Procédé selon la revendication 1, **caractérisé en ce que** le premier message indique une capacité de compression selon la spécification de compression par l'intermédiaire d'un identificateur de spécification de compression.

5. Procédé selon la revendication 1, **caractérisé en ce que** le premier message indique une capacité de compression selon la mise en oeuvre de compression par l'intermédiaire d'un identificateur de mise en oeuvre de compression.

6. Procédé selon l'une des revendications 1 à 5, **caractérisé en ce que** le second message indiquant une option de compression comprend au moins un code d'état de réponse et une identification du premier message.

7. Procédé selon l'une des revendications 1 à 6, **caractérisé en ce que** le premier message et le second message sont échangés pendant le temps d'exécution du processus logiciel.

8. Procédé selon l'une des revendications 1 à 7, **caractérisé en ce qu'**il comprend une étape consistant à activer une mise en oeuvre de compression pour établir le schéma de compression de communication.

9. Procédé selon l'une des revendications 1 à 7, **caractérisé en ce qu'**il comprend une étape consistant à découvrir une mise en oeuvre de compression pour établir le schéma de compression de communication en téléchargeant une mise en oeuvre de compression pour établir le schéma de compression de communication.

10. Procédé selon l'une des revendications 1 à 9, **caractérisé en ce qu'**il comprend en outre une étape consistant à activer un mécanisme de temporisation au début de la négociation de schéma de compression.

11. Procédé selon l'une des revendications 1 à 10, **caractérisé en ce qu'**il comprend l'étape consistant à se rabattre sur une communication de données sans application d'un schéma de compression quand un schéma de compression ne peut pas être établi.

12. Appareil de négociation de schéma de compression pour le support d'une communication efficace en ce qui concerne le débit entre des processus logiciels communiquant, comprenant :
- une unité de communication de schéma de compression
-- conçue pour échanger un premier message indiquant une capacité de compression d'un processus logiciel pour s'accorder sur un schéma de compression de communication à utiliser pendant une communication suivante avec le processus logiciel ; et
-- conçue pour échanger un second message indiquant une option de compression en réponse au premier message pour établir le schéma de compression de communication à utiliser pendant la communication suivante ;
***caractérisé par***
- une unité d'établissement de schéma de compression conçue pour établir un schéma de compression en tant que fonction de la capacité de compression et de l'option de compression ; et
conçue pour encapsuler le premier message et le second message pour la compatibilité avec le protocole de transport utilisé pour l'échange de message ; et
une unité d'indication de capacité de compression qui est conçue pour paramétrer le premier message pour l'indication d'une capacité de compression sur des niveaux différents d'abstraction selon la catégorie de compression comprenant des schémas de compression réduisant la redondance, des schémas de compression réduisant la redondance et les informations non pertinentes, la compression symétrique, la compression asymétrique, des schémas de compression ignorant les informations non pertinentes, des schémas de compression utilisant des informations concernant les données à échanger, la compression fractale, le codage de Huffman, la compression par ondelettes, GIF, JBG, JPEG, PNG, MJPEG, MPEG, Musicam, selon la spécification de compression qui est le nom d'un algorithme de compression spécifique, ou selon la mise en oeuvre de compression qui est la référence à un code logiciel de compression pouvant être mis en oeuvre.

13. Appareil selon la revendication 12, **caractérisé en ce que** l'unité d'indication de capacité de compression conçue pour paramétrer le premier message pour l'indication de schémas de compression supportés par le processus logiciel en tant que liste ordonnée selon le gain de compression.

14. Appareil selon la revendication 12, **caractérisé en ce que** l'unité d'indication de capacité de compression est conçue pour paramétrer le premier message pour l'indication d'une capacité de compression selon la catégorie de compression par l'intermédiaire d'un identificateur de catégorie de compression.

15. Appareil selon la revendication 12, **caractérisé en ce que** l'unité d'indication de capacité de compression est conçue pour paramétrer le premier message pour l'indication d'une capacité de compression selon la spécification de compression par l'intermédiaire d'un identificateur de spécification de compression.

16. Appareil selon la revendication 12, **caractérisé en ce que** l'unité d'indication de capacité de compression est conçue pour paramétrer le premier message pour l'indication de mise en oeuvre de compression avec un identificateur de mise en oeuvre de compression.

17. Appareil selon l'une des revendications 12 à 16, **caractérisé en ce qu'**il comprend une unité d'indication d'option de compression conçue pour paramétrer le second message pour l'indication d'au moins un code d'état de réponse et d'une identification du premier message.

18. Appareil selon l'une des revendications 12 à 17, **caractérisé en ce que** l'unité de communication de schéma de compression est conçue pour échanger le premier message et le second message pendant le temps d'exécution du processus logiciel.

19. Appareil selon l'une des revendications 12 à 18, **caractérisé en ce qu'**il comprend une unité d'activation de mise en oeuvre de compression conçue pour activer une mise en oeuvre de compression pour établir le schéma de compression de communication.

20. Appareil selon l'une des revendications 12 à 18, **caractérisé en ce qu'**il comprend une unité de découverte de mise en oeuvre de compression conçue pour découvrir une mise en oeuvre de compression pour établir le schéma de compression de communication en téléchargeant une mise en oeuvre de compression pour établir le schéma de compression de communication.

21. Appareil selon l'une des revendications 12 à 20, **caractérisé en ce qu'**il comprend en outre une unité de commande conçue pour activer un mécanisme de temporisation au début de la négociation de schéma de compression.

22. Appareil selon l'une des revendications 12 à 21, **caractérisé en ce que** l'unité de commande est conçue pour amorcer un repli vers une communication de données sans application d'un schéma de compression quand un schéma de compression ne peut pas être établi.

23. Produit formant programme informatique pouvant être directement chargé dans la mémoire interne d'un appareil de négociation de schéma de compression, comprenant des parties de code logiciel pour effectuer les étapes d'une des revendications 1 à 11, lorsque le produit est exécuté sur un processeur de l'appareil de négociation de schéma de compression.
